**Europäisches Patentamt**

**European Patent Office**

**Office européen des brevets**

(19)

(11) Publication number: **0 016 046**
**B1**

(12) **EUROPEAN PATENT SPECIFICATION**

(45) Date of publication of patent specification: **29.08.84**

(51) Int. Cl.³: **F 02 B 19/06**

(21) Application number: **79900668.9**

(22) Date of filing: **13.06.79**

(86) International application number:
**PCT/SE79/00133**

(87) International publication number:
**WO 80/00095 24.01.80 Gazette 80/02**

(54) **METHOD AND ARRANGEMENT FOR INCREASING THE EFFICIENCY OF AN INTERNAL COMBUSTION ENGINE AND REDUCING ITS POLLUTANTS.**

(30) Priority: **15.06.78 SE 7806909**

(43) Date of publication of application:
**01.10.80 Bulletin 80/20**

(45) Publication of the grant of the patent:
**29.08.84 Bulletin 84/35**

(84) Designated Contracting States:
**FR**

(56) References cited:
**DE-A-2 456 062**
**DE-A-2 705 339**
**DE-C- 518 451**
**DE-C- 809 613**
**FR-A-1 469 543**
**GB-A- 256 286**
**GB-A- 268 533**
**GB-A- 568 002**
**US-A-2 316 790**
**US-A-3 741 175**
**US-A-4 143 628**

(73) Proprietor: **GUSTAVSSON, Alvar**
**Restadvägen 40**
**S-617 00 Skärblacka (SE)**

(72) Inventor: **GUSTAVSSON, Alvar**
**Restadvägen 40**
**S-617 00 Skärblacka (SE)**

(74) Representative: **Harlé, Robert et al**
**c/o Cabinet Harlé & Phélip 21, rue de la Rochefoucauld**
**F-75009 Paris (FR)**

EP 0016 046 B1

## Description

On combustion of the fuel mixture in a normal otto cycle engine there is usually an excess of fuel in the mixture to ensure that ignition takes place. Under practical conditions it has been proved that the stoichiometric mixing ratio, as also a mixing ratio with excess of air, renders the fuel mixture difficult to ignite.

The thermal efficiency of an internal combustion engine and the power output obtainable from a given engine for unchanged fuel consumption both increase with the compression ratio of the engine. Higher compression requires a petrol with higher octane number. But there is also a limit at which knocking phenomena occur.

The compression ratio of an engine is usually chosen so that the knock threshold is not exceeded at full engine load, i.e. when there is maximal quantity of air-fuel mixture. This implies, on the other hand, that when the engine works with a lower load the intake of fuel mixture is considerably lower. In such case one could have a higher compression without risk of knocking, at the same time as the fuel economy would be improved.

The object of the present invention is to produce such an engine design and such a combustion process that the engine will not only be more economical in fuel owing to its having variable compression, but it will also be possible to work with a greater excess of air in the total gas mixture, which leads to more complete combustion and thus clean exhaust.

US—A—3.741.175 discloses a method according to the preamble of claim 1.

According to this method the engine compression volume is so arranged that it comprises two separate but mutually associated volumes. The first volume consists, in the ordinary way, of the volume enclosed above the working piston, while the second volume consists of a precombustion chamber with variable volume. The precombustion chamber volume is varied cyclically with a frequency that is synchronous with the engine revolutions, while the amplitude or size of the change of volume is varied in dependence on the engine load.

At the end of the precombustion stroke and beginning of the power stroke there is great tubulence in the combustion chamber. To ensure ignition with a stoichiometric ratio of the air-fuel mixture, as also when there is an excess of air, the air-fuel mixture introduced in the precombustion chamber is screened off from the working cylinder by a constriction. In this way an air-fuel mixture which is so rich that no ignition problem arises is always obtained in the precombustion chamber.

It is then apparent that the constriction has its chief function in conjunction with the ignition of the air-fuel mixture. According to the invention a combustion process is obtained in which the constriction of the channel or passage between precombustion and combustion chambers is varied during the working cycle of the engine in such a way that it has its greatest effect at the beginning of the power stroke.

US—A—3.741.175 also discloses an arrangement as described in the preamble of claim 2. According to the invention, a variable constriction is achieved by providing that the working piston has at its top a projection, operative together with the top of the working cylinder to form a constriction of the opening when the working piston is in its upper dead center.

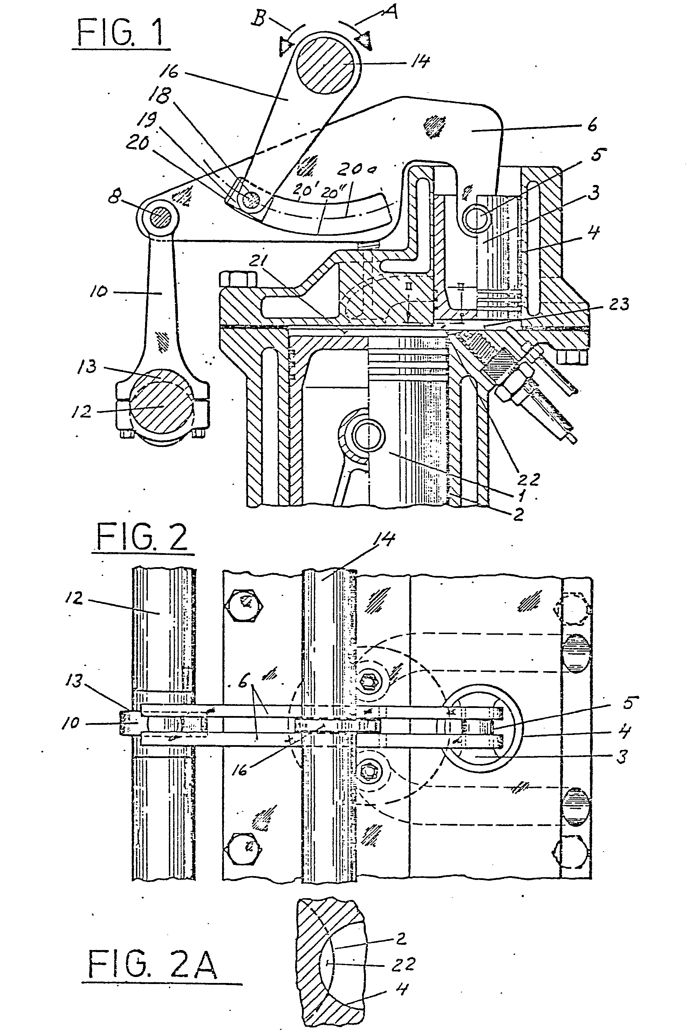

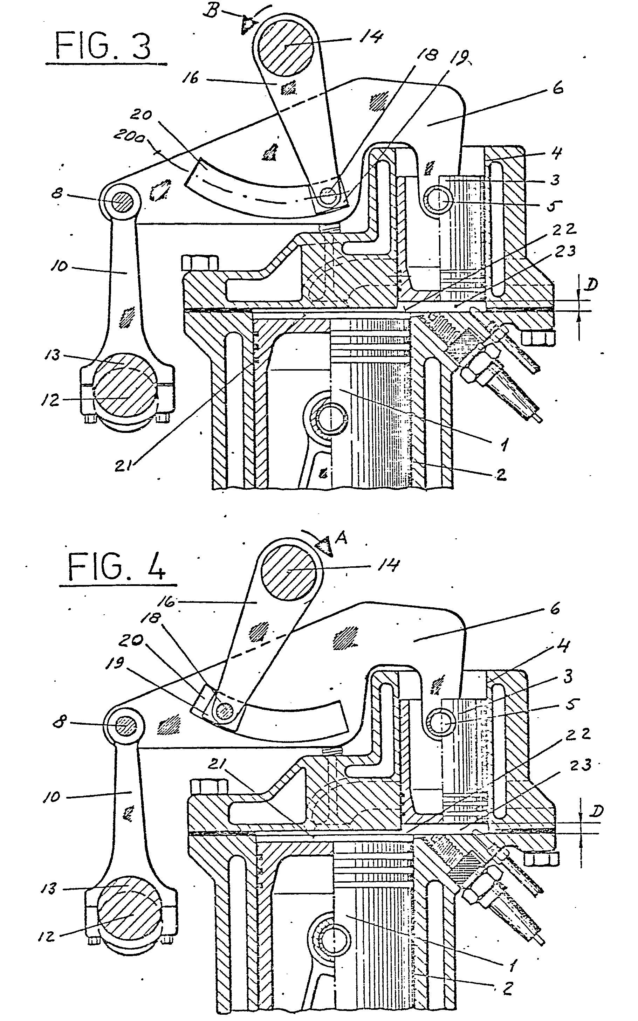

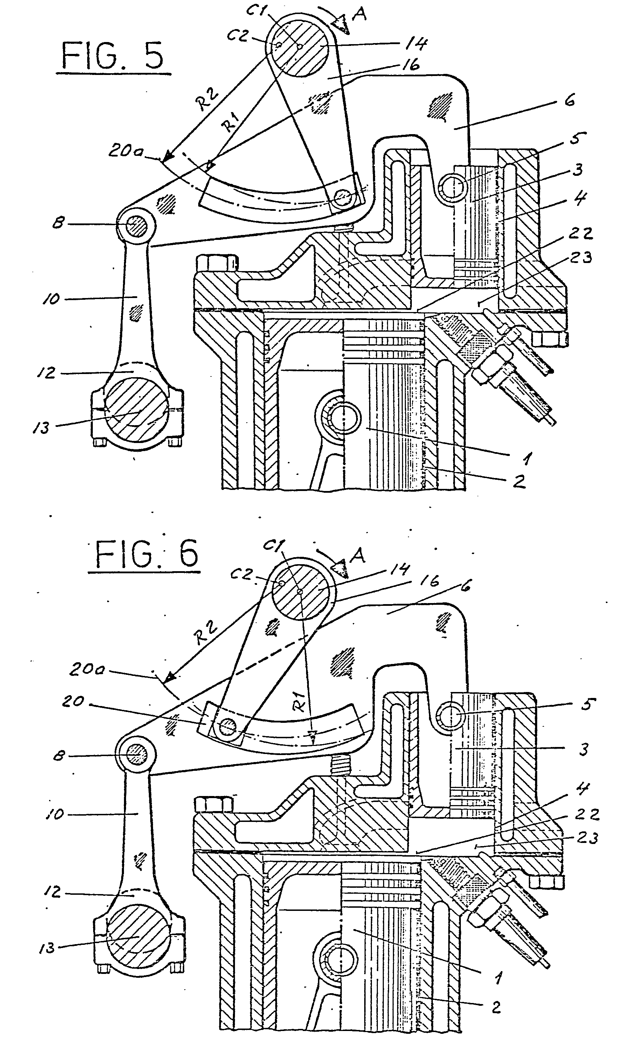

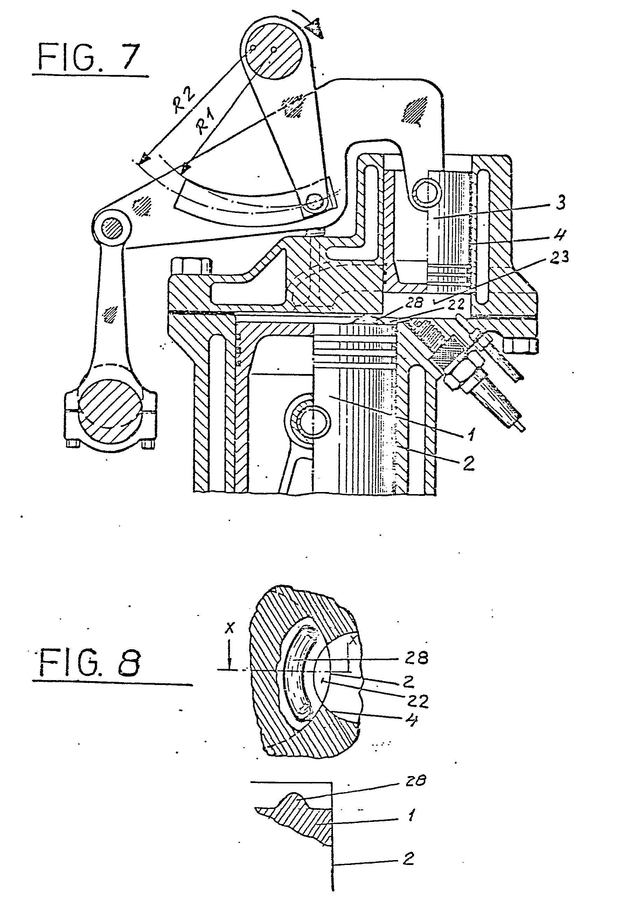

The invention will now be described with reference to the attached drawings, of which Fig. 1 shows schematically the parts, essential for the invention, of an internal combustion engine of Otto cycle type, viewed in a plane perpendicular to the longitudinal direction of the crankshaft and with certain parts cut away for greater clarity, Fig. 2 shows the parts in Fig. 1 viewed from above, Fig. 3 shows schematically, in the same way as in Fig. 1, the position of the engine parts at the beginning of the intake stroke at low engine load, Fig. 4 shows the position of the engine parts at the beginning of the intake stroke at high engine load, Fig. 5 shows the position of the engine part at the beginning of the power stroke at low engine load, Fig. 6 the same parts at the beginning of the power stroke at high engine load, and Figs. 7 and 8 an alternative arrangement of the parts.

In the Figures 1 denotes a working piston and 2 the working cylinder, while 3 denotes a compression piston in a precompression chamber cylinder 4. The compression piston 3 is hinged through a piston pin 5 to one end of a lever 6, the other end of which is hinged through a pin 8 to a piston rod 10, which constitutes a crank mechanism together with an eccentric or crank 13 on the shaft 12. In a portion between the piston pin 5 and the pin 8 the lever 6 has an oblong coulisse opening or guide-way 20 extending roughly in the same direction as the line joining pins 5 and 8. The guide-way has two opposing guide surfaces 20' and 20'' on the two sides of and equidistant from a circular midline 20a, all of which are concentric. The radius of curvature of the midline 20a is R2 and its centre is C2 (see Figs. 5 and 6).

The point C2 thus has a fixed position in relation to the lever 6 and accordingly follows its movements.

In the guide-way a cube 19 is slidably arranged and is revolvingly carried by a shaft 18 arranged on the end of the control arm 16. The latter is fixed to a control shaft 14 which is set by a device of known kind, not shown in the drawings, in an angular position depending on the engine load. With increasing engine load the control shaft 14 is rotated in the direction indicated by the arrow A and with decreasing engine load in the direction indicated by the arrow B. The distance between the centre of shaft 18 and the centre C1 of the control shaft is R1 (see Figs. 5 and 6).

The cube 19 thus can be displaced in the guide-way 20 in the lever 6, the transmission ratio of the lever 6, i.e. the distance between the shaft 18 and the piston pin 5 in relation to the distance between the pin 8 and the shaft 18, being changed in dependence on the load through the rotation of the control shaft 14. When the shaft 18 and the cube 19 are in their left-hand position in the figures, i.e. at high engine load as in Fig. 6, the transmission ratio of the lever 6 is large, so that the travel of the precompression chamber piston or compression piston 3 is large. At low engine load as in Fig. 5 the shaft 18 and cube 19 are in their right-hand position in the figures, in this case the end position, the transmission ratio is small and the travel of the compression piston 3 small.

The driving shaft 12 for the movement of the compression piston 3 is given by a transmission (not shown) a speed of rotation half that of the engine shaft. This implies that while the working piston 1 performs a movement during an engine revolution from the innermost position in the working cylinder 2, shown in Fig. 1, to the outermost position in the working cylinder and back, the precompression chamber piston 3 performs a movement only in one direction, from the position shown in Fig. 1, where the precompression chamber piston is in its innermost position in the precompression chamber cylinder 4, to the outermost position in the precompression chamber cylinder. At the next full engine revolution the piston 3 will move back in the opposite direction to the innermost position in the cylinder 4. This will be described in greater detail below.

Fig. 2 shows the engine parts in Fig. 1 viewed from above, identical parts having the same notations.

It will also be seen from the figures that the compression chamber consists of two sub-volumes, the compression chamber 21 above the working piston 1 and the compression chamber 23 under the compression or precompression chamber piston 3. The two compression chambers communicate with one another via a channel or passage 22. In the embodiment shown the channel is bounded by arcs with radii corresponding to those of the working piston 1 and the piston 3. This opening will be seen more clearly from Fig. 2A, in which portions of the overlying parts are cut away. The channel can be formed in another way without thereby departing from the idea of the invention.

Fig. 3 shows the engine parts at the end of the exhaust stroke or beginning of the intake stroke in the case when the engine is working at low load. The control shaft 14 has been rotated counterclockwise in the figure in the direction of the arrow B so far as this is possible, so that the cube 19 is at the end of the guide-way 20 adjoining piston 3. The eccentric mechanism 12—13—10—8 is in the position where the shaft 8 reaches its uppermost position. This implies in turn that the piston pin 5 and thus the piston 3 are in their innermost position in the cylinder 4.

The midline 20a for the guide-way 20, and thus for the shaft 18, consists of an arc with radius R2 and centre in C2, as described above.

To achieve the properties characteristic of the invention it is arranged that the radii R1 and R2 are equal. It is also arranged that the piston 3 always reaches the same innermost position at distance D from the top of cylinder 4 (see Figs. 3 and 4) regardless of the load. This is achieved by arranging that centre C2 for the guide-way 20 in lever 6 coincides with centre C1 for the control shaft 14 when lever 6 assumes the position shown in Figs. 3 and 4. These two figures show a position of lever 6 which is determined by the position of piston pin 5 at the innermost position of piston 3 (distance D) in cylinder 4 and the uppermost position of pin 8.

Figs. 3 and 4 show the position of the engine parts at the point in the engine working cycle where the exhaust stroke is completed and the intake stroke is to start (Fig. 3 at lowest engine load and Fig. 4 at highest engine load). From the description above it is thus apparent that the parts 12—13—10—8—6—5—3 always assumes the same position from lowest engine load through all partial loads to highest engine load, i.e. regardless of the engine load and of the position of the parts 14—16—18—19 affected by it.

It is apparent from the description that the geometrical form of the engine parts concerned is such that the volume of the compression chambers 21 and 23 is the same at the two extremes of the engine load shown in Figs. 3 and 4, as also at every other load between them, regardless of the load.

From the position shown in Figs. 3 and 4 the working piston 1 performs a downward intake stroke followed by a compression stroke to the positions shown in Figs. 5 and 6. From there the working piston 1 performs a downward power stroke under combustion of the fuel mixture and then moves upwards under exhaust of the combustion gases, which takes place very effectively owing to the fact that the working piston 1 and the piston 3 move towards one another.

In the position shown in Fig. 5, which thus shows the position of the parts at the beginning of the power stroke at low engine load, the cube 19 is in its right-hand end position, the eccentric 13 and the pin 8 in their lowest positions, so that the piston pin 5 and the piston 3, owing to rotation of lever 6 round shaft 18, are in their highest position.

Fig. 6 shows the position of the engine parts at the moment of ignition after the working piston 1 at high load has performed during one engine revolution a reciprocal movement in the working cylinder 2 from the position shown in Fig. 4 back to the innermost position. The eccentric mechanism 12—13—10 has moved the pin 8 to its lowest position. Since the control arm 16, in dependence on the high engine load in Fig. 6, has moved the shaft 18 with cube 19 to the left, the transmission ratio, i.e. the distance between shaft 18 and piston pin 5 in relation to the distance between pin 8 and shaft 18, has increased in comparison with the load condition shown in Fig. 5. This has the result that, at the beginning of the power stroke, the piston 3 is further out in the cylinder 4 than at the lower load shown in Fig. 5.

When, from the position shown in Fig. 6, the working piston 1 performs a reciprocating movement comprising a power stroke and an exhaust stroke, the piston 3 will move from the position shown in Fig. 6 to that shown in Fig. 4. From the previous description, and on comparison of Figs. 3 and 5 with Figs. 4 and 6, it is apparent that the compression volume at the beginning of the intake stroke is the same (see Figs. 3 and 4) both at low and high engine load, whereas the intake volume and the volume at the end of the compression stroke are greater at high than at low load (see Figs. 6 and 5). This has the result, accordingly, that the compression ratio at high load is less than at low, i.e. that change of compression in relation to the engine load has been attained which is desired in order to increase the efficiency of the engine.

The cyclical change of the compression chamber 21 + 23 is achieved by means of a small precompression chamber piston or compression piston 3 placed in a precompression chamber, which reduces the forces on the operating mechanism 12, 13, 10, 8, 20, 19, 6, 5 for the piston 3, at the same time as the latter has a longer movement in the cylinder 4, which involves less risk of the compression or precompression chamber piston 3 coking up and seizing, which in turn results in greater reliability of the engine. Likewise an almost complete evacuation of the residual gases is obtained, since the working piston and the piston 3 move towards one another.

Another essential advantage of the invention is attained in the design shown in Fig. 6.

A very important advantage of the invention is obtained through the design shown in the figures, with injection of fuel into the precompression chamber or the compression chamber 23. Through the constriction constituted by the channel or passage 22 the fuel-air mixture will be richer in fuel in the compression chamber 23 than in the compression chamber 21 of the working cylinder 2. This ensures good ignition of the fuel-air mixture which, after passage through the channel 22, enters the working cylinder 2 and is burnt with excess of air. If accordingly, the sparking plug is placed in or close to the compression chamber 23, a more reliable and effective ignition is obtained in this way than if ignition were to occur in an entirely homogeneous and leaner fuel-air mixture.

The asymmetry between rich and lean fuel-air mixture can be affected through the form and size of the channel 22 between the two cylinders 4 and 2, so always ensuring reliable ignition. By suitable design of the channel it is also possible to achieve a stratified combustion with different characters, e.g. by shaping the channel for different flow resistances and constricting effects, varying heat transmission etc. Apart from the almost complete combustion of the hydrocarbons in the fuel owing to the excess of air, the combustion time and combustion temperature can also be affected so as to reduce the formation also of nitrogenous oxides.

Figs. 7 and 8 show examples of the form of such a special channel adapted to perform the method according to the invention. They show the form of the portion round channel 22, Fig. 7 being a broken-out sub-portion corresponding to Figs. 1, 3—6, while Fig. 8 is a view corresponding to Fig. 2A. In the embodiment shown a projection 28 has been placed in an arc on the upper side of the working piston 1, the cam extending up towards the ceiling of the working cylinder 2. Above and at the sides of the cam are formed slots through which the fuel-air mixture flows out from the combustion chamber 23 to chamber 21 of the working cylinder. Since the projection 28 is in engagement with the working piston 1, it moves with it. There is therefore a slit and constriction, varying with the working cycle of the engine, which are smallest — and therefore cause most constriction — in the top position of the working piston 1.

## Claims

1. Method for increasing the efficiency of and reducing the exhaust pollution at typically part load of a four-stroke, internal combustion engine the working pistons (1) of which are reciprocating in working cylinders (2), each having a precombustion chamber (23), partly forming a cylinder directly communicating with the working cylinder (2) via a channel or passage which exhibits some constriction, and in which a precombustion chamber piston (3) is cyclically reciprocating with half the frequency of the working piston (1), said method comprising the following steps:

— the fuel consumption of the engine is determined in a way known per se in dependence of the part load;

— by means of the stroke of the piston (3) the volume of precombustion chamber (23) is controlled such that, at the top dead centre during the working piston (1) compression stroke, the volume of the precombustion chamber reaches a value depending on the pressure in said chamber, at the top dead centre during the working piston (1) exhaust stroke, said volume of the precombustion chamber reaches a constant minimum value, independent of the engine load;

— all the amount of the fuel needed for any required engine load is injected, during the compression stroke, into the precombustion chamber (23) in which it mixes with air and forms a rich fuel-air mixture;

— thereafter the fuel-air mixture is ignited by means of a spark or similar;

— the burning gas-mixture is allowed to expand into the working cylinder (2) communicating with the precombustion chamber (23) via the channel or passage (22), in which cylinder (2) the combustion reaction proceeds with the available excess air present in the working cylinder characterized in that the constriction of said channel or passage (22) is varied during the working cycle of the engine in such a way that it has its greatest effect at the beginning of the power stroke.

2. Arrangement for implementation of the method according to claim 1 and comprising working pistons (1) engaging with a crankshaft and moving in working cylinders (2) communicating each with its precombustion chamber (23, 3, 4) said precombustion chamber consisting of a cylinder with a compression piston (3) displacable in a bore (4) and driven by means of transmission devices (12, 13, 10, 8, 6, 5) from the engine crankshaft so that the compression piston (3) moves cyclically and synchronously with the engine crankshaft, so that the compression piston completes a full cycle during two revolutions of the engine crankshaft, characterized in that the working piston has at its top a projection (28), operative together with the top of the working cylinder (2) to form a constriction of the opening (22) when the working piston is in its upper dead centre.

## Patentansprüche

1. Verfahren zum Erhöhen der Leistungsfähigkeit und zum Verringern der Abgasverschmutzung, wie sie typischerweise be Teillast einer Viertakt-Brennkraftmaschine auftritt, deren Arbeitskolben (1) in Arbeitszylindern (2) hin- und hergehend angeordnet sind, wobei die Zylinder jeweils eine Vorverbrennungskammer (23) aufweisen, die teilweise einen Zylinder bildet, der direkt mit dem Arbeitszylinder (2) über einen Kanal oder Durchtritt kommuniziert, welcher etwas verengt ist, und wobei ein Vorverbrennungskammerkolben (3) mit der halben Frequenz der Arbeitszylinders (1) zyklisch hin- und hergeht, welches Verfahren die folgenden Schritte umfaßt:

— Der Brennstoffverbrauch der Maschine wird in an sich bekannter Weise in Abhängigkeit von der Teillast bestimmt;

— mittels des Hubes des Kolbens (3) wird das Volumen der Vorverbrennungskammer (23) derart gesteuert, daß am oberen Todpunkt des Verdichtungshubes des Arbeitszylinders (1) das Volumen der Vorverbrennungskammer einen Wert erreicht, der abhängt vom Druck in dieser Kammer, am oberen Todpunkt des Ausblashubes der Arbeitszylinders (1) dieses Volumen der Vorverbrennungskammer einen konstanten Minimalwert erreicht, der unabhängig ist von der Maschinenlast;

— die gesamte für irgendeine erforderliche Maschinenlast benötigte Brennstoffmenge während des Kompressionshubes in die Vorverbrennungskammer (23) eingespritzt wird, in der sie sich mit Luft mischt und ein fettes Luft-Air-Gemisch bildet;

— danach die Luft-Brennstoff-Mischung mittels einer Kerze oder dergl. gezündet wird;

— die verbrennende Gasmischung läßt man in den Arbeitszylinder (2) entspannen, der mit der Vorverbrennungskammer (23) über den Kanal oder Durchtritt (22) kommuniziert, in welchem Zylinder (2) die Verbrennungsreaktion mit dem zur Verfügung stehenden im Arbeitszylinder vorhandenen Luftüberschuß erfolgt, dadurch gekennzeichnet, daß die Verengung des Kanals oder Durchtritts (22) während des Arbeitszyklus' der Maschine derart verändert wird, daß sie ihren größten Effekt zu Beginn des Arbeitshubes besitzt.

2. Anordnung zur Durchführung des Verfahrens nach Anspruch 1, mit Arbeitskolben (1) in Wirkverbindung mit einer Kurbelwelle und beweglich in Arbeitszylindern (2) angeordnet, die jeweils mit zugeordneter Vorverbrennungskammer (23, 3, 4) kommunizieren, wobei die Vorverbrennungskammer aus einem Zylinder mit einem Kompressionskolben (3) besteht, der in einer Bohrung (4) verlagerbar ist und angetrieben wird mittels Transmissionseinrichtungen (12, 13, 10, 8, 6, 5) von der Maschinenkurbelwelle derart, daß der Kompressionskolben (3) zyklisch und synchron mit der Maschinenkurbelwelle umläuft und der Kompressionskolben einen vollständigen Zyklus während zwei Umläufen der Maschinenkurbelwelle ausführt, dadurch gekennzeichnet, daß der Arbeitskolben an seiner Oberseite einen Fortsatz (28) aufweist, der mit der Oberseite des Arbeitszylinders (2) zusammenwirkt zur Ausbildung einer Verengung der Öffnung (22), wenn der Arbeitskolben sich in seinem oberen Todpunkt befindet.

## Revendications

1. Procédé pour augmenter l'efficacité d'un moteur à combustion interne à quatre temps, et réduire la pollution à l'échappement de celui-ci sous charge partielle normale, les pistons de travail (1) de ce moteur se déplaçant à va-et-vient dans des cylindres de travail (2) comportant chacun une chambre de précombustion (23) celle-ci formant en partie un cylindre qui communique directement avec le cylindre de travail (2) par un conduit ou passage présentant une partie resserrée, et dans laquelle un piston de chambre de précombustion (9) se déplace cycliquement à va-et-vient avec une fréquence moitié de celle du piston de travail (1), ledit procédé comportant les étapes suivantes:

— on détermine la consommation de carburant du moteur, de façon connue en soi, en fonction de la charge partielle,

— on commande le volume de la chambre de précombustion (23) par l'intermédiaire de la course de son piston (3), de telle façon qu'au point mort haut de la course de compression du piston de travail (1) le volume de la chambre de précombustion atteigne une valeur qui dépend de la pression dans cette chambre, alors qu'au point mort haut de la course d'échappement de piston de travail (1) le volume de la chambre de précombustion atteigne une valeur minimale constante, indépendante de la charge du moteur,

— pendant la course de compression, on injecte toute la quantité de carburant nécessaire pour toute charge du moteur dans la chambre de précombustion (23), dans laquelle ce carburant se mélange avec de l'air pour former un mélange riche air-carburant,

— on allume le mélange air-carburant avec une étincelle ou analogue,

— on laisse le mélange air-carburant en cours de combustion s'épancher dans le cylindre de travail (2) qui communique avec la chambre de précombustion (23) à travers le conduit ou passage (22), ce mélange venant en contact, dans ce cylindre, avec l'excès d'air disponible qui s'y trouve, caractérisé en ce qu'on fait varier la partie resserrée dudit conduit ou passage (22) pendant le cycle de travail de telle façon qu'elle air sa plus grande efficacité au début de la course de travail.

2. Dispositif pour la mise en oeuvre du procédé selon la revendication 1, et comprenant des pistons de travail (1) coopérant avec un vilebrequin et se déplaçant chacun dans un cylindre de travail (2) qui communique avec sa chambre de précombustion (23, 3, 4), cette chambre de précombustion comprenant un cylindre avec un piston de compression (3) mobile dans un alésage (4) et entraîné par le vilebrequin du moteur par l'intermédiaire de dispositifs de transmission (12, 13, 10, 8, 6, 5) de telle façon que ledit piston de compression (3) se déplace cycliquement et en synchronisme avec le vilebrequin du moteur de telle manière que ledit piston de pression fait un cycle complet pendant deux tours de vilebrequin, caractérisé en ce que le piston de travail comporte à son sommet une saillie (28), disposée pour coopérer avec le sommet du cylindre de travail afin de former une partie resserrée de l'ouverture (22) quand le piston de travail est à son point mort haut.

0 016 046

FIG. 1

FIG. 2

FIG. 2A

FIG. 3

FIG. 4

0 016 046

## FIG. 5

## FIG. 6

FIG. 7

FIG. 8